# FASCICULE DE BREVET EUROPEEN

(11) **EP 1 521 661 B1**
(45) Date de publication et mention de la délivrance du brevet: **10.05.2006**
(21) Numéro de dépôt: 03755584.4
(22) Date de dépôt: 08.07.2003
(51) Int. Cl.: B23K 26/04

(54) **SYSTEME ET PROCEDE D'USINAGE D'OBJETS A L'AIDE D'UN LASER**
SYSTEM UND VERFAHREN ZUR BEARBEITUNG VON GEGENSTÄNDEN MITTELS EINES LASERS
SYSTEM AND METHOD OF MACHINING OBJECTS USING A LASER

(30) Priorité: 11.07.2002 FR 0208742
(43) Date de publication de la demande: 13.04.2005
(73) Titulaire: COMMISSARIAT A L'ENERGIE ATOMIQUE, 75752 Paris Cédex 15 (FR); Renaud Lasers, 77794 Nemours Cedex (FR)
(72) Inventeur: BORGOLTZ, Jean-Philippe, F-91770 SAINT VRAIN (FR); RENAUD, Richard, F-77760 NANTEAU SUR LUNAIN (FR)
(74) Mandataire: Poulin, Gérard
(86) Numéro de dépôt international: PCT/FR2003/002120
(87) Numéro de publication internationale: WO 2004/007136

(56) Documents cités:
- WO-A-01/07195

## Description

### DOMAINE TECHNIQUE

La présente invention concerne un système et un procédé d'usinage d'objets à l'aide d'un laser, avec une reconnaissance de formes. Ce procédé peut être utilisé notamment dans le domaine du marquage, du soudage, du perçage, du découpage ou du traitement thermique par laser.

### ETAT DE LA TECHNIQUE ANTERIEURE

Le domaine de l'invention est celui de l'usinage, par exemple du marquage ou du soudage, de très petits objets avec prépositionnement de la surface de référence, avec forte cadence et reconnaissance automatique de l'endroit à usiner (position-orientation). L'orientation des objets peut être aléatoire mais sans chevauchement.

Le marquage d'objets sans ajout de peinture d'autres éléments permet de conserver la qualité "médicale" des objets marqués ou la qualité de propreté "électronique".

Il existe de nombreuses solutions de marquage : par peinture, par jet d'encre, par sablage ... Mais aucune ne permet de marquer des objets de petite taille ou de géométrie complexe.

De plus, il y a une contamination de l'objet par la peinture et nécessité d'un positionnement antérieur au marquage qui est industriellement coûteux.

Aucun procédé de l'art antérieur ne permet de réaliser simultanément des opérations de soudage assemblage et de marquage.

Le document WO01/07195 A considéré comme le meilleur état de la technique décrit un système d'usinage d'objets à l'aide d'un faisceau laser, comprenant:
- un plateau support d'objets,
- une tête galvanométrique comportant
   - une caméra avec sa lentille de champ,
   - un miroir de guidage,
   - des miroirs galvanométriques de déflexion,
   - une lentille qui permet de visualiser au moins un objet situé sur le plateau,
- une source laser,
- un calculateur

Le document WO01/07195 A décrit aussi:
un procédé d'usinage d'objets à l'aide d'un laser, à l'aide d'un système d'usinage d'objets comprenant un plateau support d'objets, une tête galvanométrique, une source laser et un calculateur, ledit procédé comprenant des étapes de:
   - dépôt des objets, sur ledit plateau,
   - visualisation de l'ensemble de ces objets
   - usinage de cet objet au moyen d'un faisceau issu de la source laser

Les machines lasers actuelles présentent une finesse de faisceau insuffisante pour répondre à une demande du marquage fin. Les divergences des faisceaux sont beaucoup trop élevées, ce qui limite l'emploi des machines lasers de marquage.

Un centre de marquage laser actuel typique peut ainsi comprendre :
- une source laser du type laser YAG pompé par lampe au krypton continu, Q switché de puissance 50 à 70 W, avec une tête galvanométrique de déplacement du faisceau en axe X et Y, une lentille de focalisation à champ plat de distance focale 200 à 300 mm. Avec un faisceau laser d'environ 80 µm, la hauteur des caractères à marquer est rarement inférieure à 500 µm à 600 µm. L'énergie mise en oeuvre est trop importante pour éviter les déformations de pièces délicates.
- un calculateur utilisant un logiciel permettant d'éditer différents caractères alpha numériques, logo, code barres, coefficients d'échelle etc...,
- un bâti d'intégration comportant notamment:
   - un support de la source laser avec un mouvement selon un axe Z (axe de réglage de la distance focale),
   - une tôlerie de protection pour la sécurité,
   - un poste de chargement-déchargement des objets à marquer avec posage spécifique ou intégré dans la ligne de fabrication,
   - table à mouvements croisés XY,
   - plateau rotatif ±180° ou asservi,
   - unité de rotation théta etc...
   - une aspiration des fumées,
   - une buse de régulation d'atmosphère.

   La dimension des sources laser ainsi que les équipements nécessaires pour un bon fonctionnement aboutissent à des machines encombrantes. L'industrie de la micromécanique se réalise le plus souvent dans des salles blanches, dans lesquelles le nombre de poussières au mètre cube est limité, donc des salles chères.
- un poste de chargement des pièces, qui comprend généralement une table plane souvent en aluminium anodisé, sur laquelle le client positionne lui-même des posages de sa conception.

Traditionnellement ces posages ne nécessitent pas une grande précision, les pièces à marquer étant d'un volume important et l'endroit à marquer n'étant pas précis (± 2 mm).

Un logiciel bien adapté permet de marquer plusieurs pièces sur le même posage par une répétition à un pas donné des fichiers de marquage.

Mais pour réaliser le marquage de pièces fines, la précision de positionnement ainsi que l'orientation des pièces sous le faisceau laser nécessitent une opération délicate et coûteuse, autant en coût d'outillage qu'en manutention. Ceci se traduit par des coûts de marquage laser très élevés et donc non réalisables. De ce fait, les systèmes de qualité et de management tels qu'ISO 9001 ne peuvent être utilisés pour de très petites pièces ou avec des formes compliquées.

L'invention a pour objet de résoudre un tel problème.

### EXPOSÉ DE L'INVENTION

L'invention concerne un système d'usinage d'objets à l'aide d'un faisceau laser, comprenant :
- une alimentation d'objets avec prépositionnement sur leur surface de référence,
- un plateau support d'objets,
- une tête galvanométrique comportant :
   - une première caméra grand champ avec sa cellule de focalisation en sortie de laquelle est disposé un premier filtre,
   - une seconde caméra petit champ avec sa lentille de focalisation en sortie de laquelle est disposé un second filtre,
   - un miroir de guidage,
   - des miroirs galvanométriques de déflexion,
   - une lentille qui permet de visualiser au moins un objet situé sur le plateau.
- une source laser,
- un calculateur muni d'un logiciel de reconnaissance de forme qui permet de contrôler le fonctionnement de ladite première caméra, de ladite seconde caméra, de ladite source laser et de moyens de pilotage en mouvement de ladite tête galvanométrique (XYZ).

Avantageusement, ledit système comprend des premier et second miroirs galvanométriques réfléchissants, un miroir escamotable, une lentille à champ plat, un tapis d'amenée des objets à usiner, et une source de gaz réactif à proximité du plateau.

On peut remplacer les deux premiers miroirs réfléchissants pivotants par un seul miroir sur rotule permettant une meilleure compacité du système.

Dans un exemple de réalisation, le filtre en sortie de la première caméra laisse passer une longueur d'onde d'environ 600 nm, la source laser est une source de longueur d'onde environ 1064 nm, le filtre en sortie de la seconde caméra laissant passer une telle longueur d'onde.

L'usinage peut correspondre à un marquage, un soudage, un perçage, un découpage ou un traitement thermique.

L'invention concerne, également, un procédé selon la revendication 10.

Une finesse de l'ordre de quelques micromètres de l'usinage permet de réaliser un suivi qualité de très petits objets complexes ou identifiés. Un marquage peut, en outre, suivre une topologie complexe. Le système de reconnaissance optique permet de réaliser une fiche qualité (photo-marquage) de chaque objet si nécessaire.

La présence de deux caméras, l'une dite de grand champ et l'autre dite de petit champ permet d'améliorer la finesse et la précision l'usinage.

L'invention permet d'effectuer un marquage "à la volée" d'une quantité importante d'objets avec visualisation et reconnaissance de forme de ceux-ci (la lecture est aussi possible). La traçabilité de ces petits objets est alors acquise.

L'invention permet aussi d'effectuer un soudage et le marquage associé (électronique). Cette technique est peu chère : elle accepte un grand flux de pièces. Elle ne contamine pas les objets : elle utilise les propriétés de combinaison du substrat avec un gaz particulier. Elle est donc bien adaptée aux produits biomédicaux ou électroniques.

L'invention peut être appliquée tout simplement aux produits alimentaires, ménagers ou automobiles et remplacer la signature qualité d'un stade de fabrication.

Le couplage du système de la pièce optique et du balayage galvanométrique permettent un usinage dans n'importe quelle position.

En résumé, le procédé de l'invention présente de nombreux avantages :
- non contamination des surfaces et non adjonction de produits (médical, horlogerie...),
- finesse et qualité de l'usinage et choix de la résolution,
- grande rapidité grâce à la reconnaissance de forme et au balayage du faisceau par miroir galvanométrique (pas de mouvement, ni de positionnement des pièces),
- possibilité d'usinage de pièces trois dimensions avec auto-focalisation,
- possibilité de marquages "artistiques" (dessins complexes),
- lecture possible d'un code barre et mise en oeuvre informatique d'un numéro ou d'un code de rejet de pièce,
- coût unitaire très faible et usinage de pièce actuellement impossible à exécuter,
- contrôle qualité,
- soudage de très petits objets et marquage en ligne, contrôle qualité intégré.

### BRÈVE DESCRIPTION DES DESSINS

- La figure 1 illustre un schéma général du système de l'invention .
- Les figures 2 et 3 illustrent Les étapes du procédé de l'invention.
- Les figures 4 et 5 illustrent deux exemples de mise en oeuvre du procédé de l'invention.

### EXPOSÉ DÉTAILLÉ DE MODES DE RÉALISATION PARTICULIERS

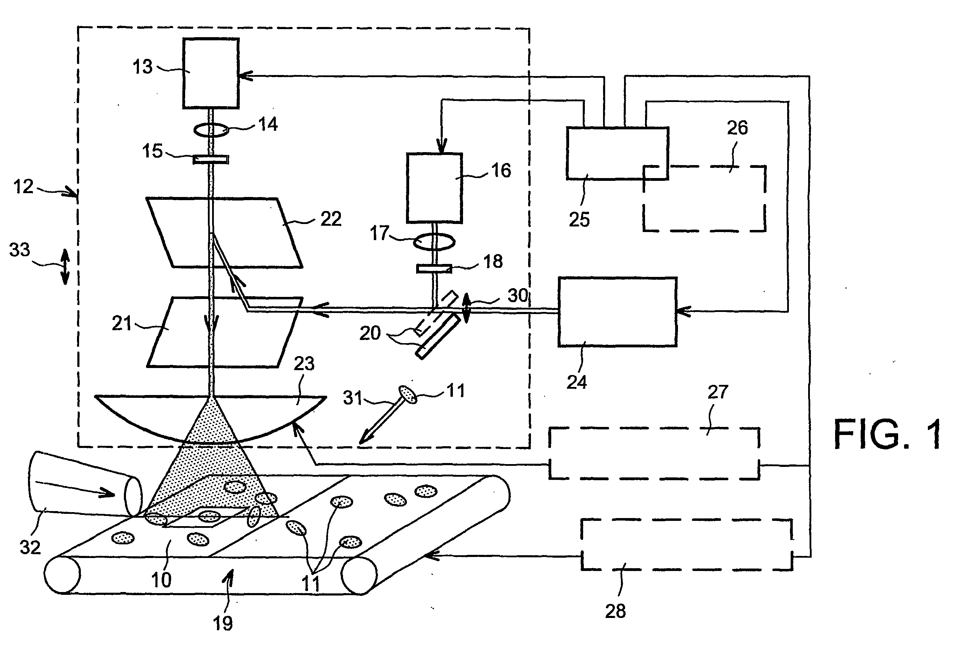

Comme illustré sur la figure 1, le système de l'invention comprend :
- un plateau 10 support d'objets 11, formé par exemple par un tapis 19 alimenté en dits objets 11,
- une tête galvanométrique 12 comportant :
   - une première caméra grand champ 13 avec sa lentille associée 14, en sortie de laquelle est disposé un premier filtre 15 laissant passer une première longueur d'onde λ1,
   - une seconde caméra petit champ 16 avec sa lentille associée 17, en sortie de laquelle est disposé un second filtre 18 laissant passer une seconde longueur d'onde λ2,
   - un miroir de guidage 20,
   - des miroirs galvanométriques 21 et 22,
   - une lentille 23,
- une source laser 24 fonctionnant à la longueur d'onde λ2.
- un calculateur 25 muni d'un logiciel de reconnaissance de forme 26 qui permet de contrôler le fonctionnement de ladite première caméra, de ladite seconde caméra, de ladite source laser et des moyens 27 et 28 de pilotage en mouvement de ladite tête galvanométrique et dudit plateau 10.

Dans le mode de réalisation illustré sur la figure 1, le système de l'invention comprend plus précisément :
- des premier et second miroirs réfléchissants galvanométriques 21 et 22,
- un miroir 20 réfléchissant escamotable selon un mouvement 30,
- une lentille à champ plat 23,
- une source 32 de gaz réactif ou de protection située à proximité du plateau.

Le procédé de l'invention comprend les étapes suivantes.

Dans une première étape, les objets 11 à usiner sont déposés sur leur surface de référence (flèche 31) sur le plateau support d'objets 10.

Ils sont, alors, automatiquement amenés dans le champ de la première caméra grand champ 13, comme illustré sur la figure 1.

Pour la visualisation grand champ de l'ensemble des objets situés sur le plateau 10, le chemin optique est donc le suivant :
- première caméra 13,
- passage à travers la lentille de focalisation 14,
- passage à travers le premier filtre 15,
- passage à travers le miroir galvanométrique 22,
- passage à travers la lentille 23.

L'analyse d'image "compte" et "oriente" les objets 11 dans un référentiel général. Il y a visualisation de l'ensemble de ces objets, identification de chacun avec sa position et mémorisation d'un point caractéristique de chaque objet (par exemple son centre de gravité G) et de son orientation.

Cette première caméra 13 regarde le plateau 10 et les objets 11 déposés sur celui-ci à travers le miroir 22 et la lentille 23. La superposition de l'image de référence et du ou des objets 11 vus est située dans ce champ. On enregistre la zone ou les zones utiles en coordonnées X et Y.

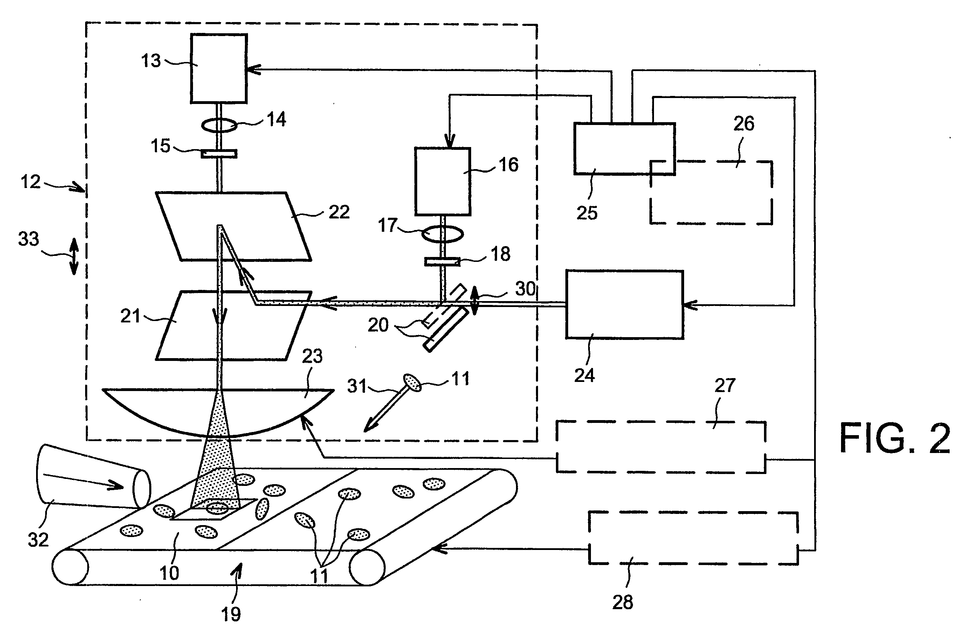

Comme illustré sur la figure 2, dans une seconde étape, la seconde caméra 16 visualise la zone ou les zones utiles en coordonnées X, Y précédentes sur un champ plus petit, à travers le miroir réfléchissant escamotable 20, les miroirs galvanométriques 21 et 22 et la lentille 23.

Pour la visualisation petit champ de la partie d'un objet à usiner, le chemin optique est donc le suivant :
- seconde caméra 16,
- passage à travers la lentille de focalisation 17,
- passage à travers le second filtre 18,
- réflexion sur le miroir escamotable 20,
- réflexion sur le miroir 21,
- réflexion sur le miroir 22,
- passage à travers la lentille 23.

On superpose l'image de référence et un premier objet vu avec grande précision, à quelques micromètres près.

Une fois cette zone parfaitement identifiée le miroir 20 est escamoté, par un mouvement 30 linéaire ou rotatif de façon bien connue de l'homme de métier, et le système de reconnaissance de forme de l'invention choisit ce premier objet et le place dans le référentiel de la seconde caméra de petit champ 16 afin de déterminer les coordonnées du point de départ et l'orientation de l'usinage.

La focalisation (z) mouvement 33 est réglée par le calculateur 25. Les miroirs galvanométriques 21 et 22 sont orientés pour effectuer l'usinage à l'aide du faisceau laser 24 au travers de la lentille 23.

Il y a alors un changement d'objet 11 et retour à l'étape précédente de placement d'un second objet 11 dans le référentiel de la seconde caméra 16.

Le système optique et la qualité des mouvements sont fonction du champ couvert de la zone d'usinage par les miroirs 21 et 22, en fait de la taille des objets 11 à usiner. La qualité de la source laser 24 (focalisation, longueur d'onde) est fonction du matériau à usiner. Le gaz réactif ou de protection (source 32) et son flux est fonction de la nature de l'objet 11.

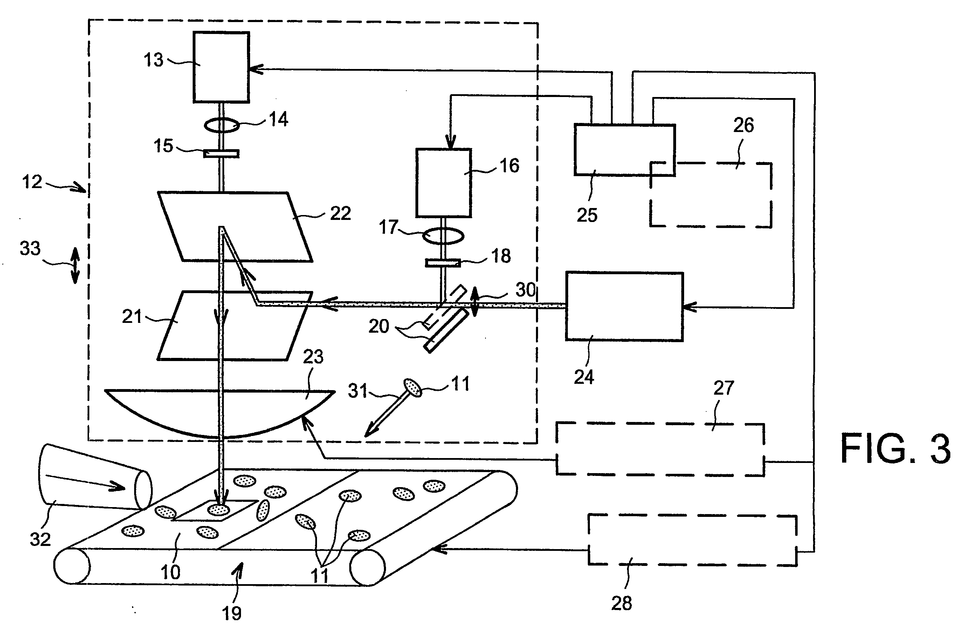

Comme illustré sur les figures 1 à 3 la surface support d'objets peut être formée de plusieurs plateaux sur un tapis 19 en mouvement, mais ce peut être également un simple support sur lequel sont amenés les objets 11.

Une autre possibilité consiste à installer le système de l'invention sur une machine d'assemblage.

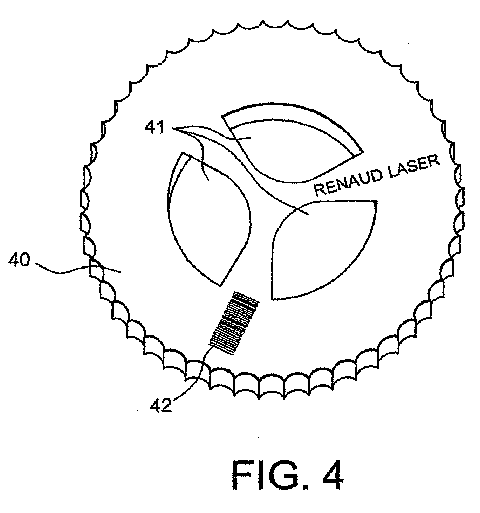

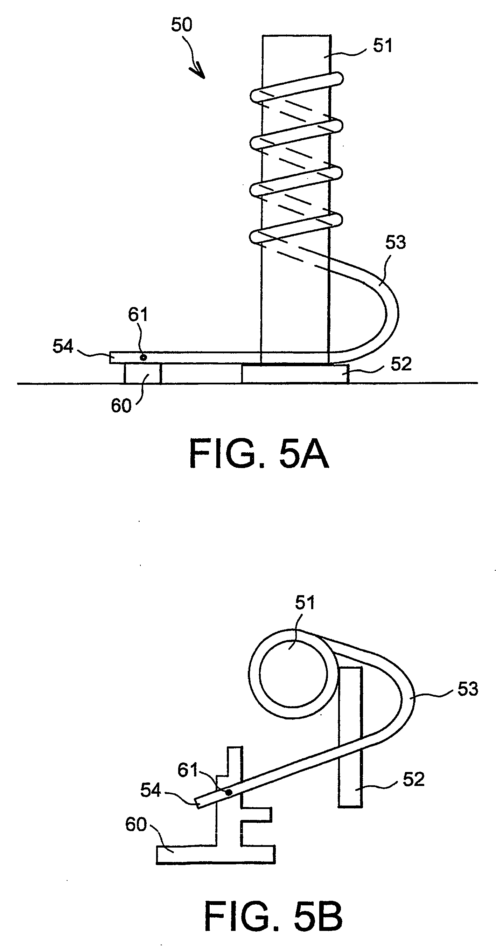

Les figures 4 et 5 illustrent deux exemples de mise en oeuvre du procédé de l'invention respectivement pour un marquage et un soudage.

La figure 4 est une vue de dessus d'une roue dentée 40 constituant un objet à marquer. La roue 40 comprend des évidements 41. Pour un diamètre de roue de 5 mm, la distance entre évidements successifs peut être de 0,2 mm. Un premier espace entre deux évidements a reçu, grâce au procédé de l'invention, l'inscription "RENAUD LASER". A titre d'exemple, la hauteur d'un caractère de cette inscription peut être de 50 µm et l'épaisseur du trait peut être de 10 µm. La référence 42 désigne un code barres inscrit entre deux évidements grâce au procédé de l'invention.

La figure 5 comprend une figure 5A et une figure 5B qui sont respectivement en vue en élévation et une vue de dessus d'une bobine électrique 50 et de sa cosse de liaison 60. La bobine 50 comprend un barreau en plastique 51 solidaire d'un support 52 comportant la référence de la bobine. Un fil conducteur 53 est bobiné sur le barreau 51 et son extrémité 54 est disposée sur la cosse 60 pour y être soudée en 61 selon le procédé de l'invention.

### EXEMPLE DE REALISATION

Dans un exemple de réalisation avantageux, le système de l'invention comprend les différents éléments suivants :
- Caméra 13 : Visualisation d'un grand champ d'environ 80mm × 80mm, avec :
   - Nombre de lignes : 768
   - Nombre de colonnes : 494
   - Longueur d'onde : environ 690 nm
   - Objectif 14 : focale de 8 mm
- Filtre 15 :
   - Transparent à une longueur d'onde λ1: d'environ 690 nm
- Miroir 22 :
   - Face située du côté de la caméra 13, transparente à longueur d'onde 690 nm
   - Autre face : réfléchissante à longueur d'onde 1064 nm
- Lentille 23 :
   - Focale : 163 mm
- Caméra 16 : Visualisation d'un petit champ d'environ 10mm × 8mm, avec :
   - Nombre de lignes : 768
   - Nombre de colonnes : 494
   - Longueur d'onde : environ 1064 nm
   - Objectif 17 : focale de 100 mm
- Filtre 18 :
   - Transparent à une longueur d'onde λ2 d'environ 1064 nm
- Miroir escamotable 20 :
   - Miroir escamotable réfléchissant à 1064 nm
- Miroir 21 :
   - Miroir réfléchissant à 1064 nm
- Source laser 24 : laser YAG pompé par diode
   - Qualité de faisceau : tâche focale de 14 micromètres
   - laser Q-Switché
   - Fréquence : de 0 à 100 kHz
   - Diamètre du faisceau en sortie : 20 mm
   - Puissance en mode fondamental TEM00 : < 5 Watts.

D'autres sources laser sont également possibles, par exemple :
- laser solides
   - laser YAG pulsé,
   - laser YAG continu,
   - laser YAG doublés, triplés ou quadruplés en fréquence,
- lasers à gaz
   - laser CO2,
   - laser à excimère.

## Revendications

1. Système d'usinage d'objets (11) à l'aide d'un faisceau laser, comprenant:
- une alimentation d'objets avec prépositionnement sur leur surface de référence,
- un plateau (10) support d'objets,
- une tête galvanométrique (12) comportant :
• une première caméra grand champ (13) avec sa lentille de focalisation (14) en sortie de laquelle est disposé un premier filtre (15),
• une seconde caméra petit champ (16) avec sa lentille de focalisation (17) en sortie de laquelle est disposé un second filtre (18),
• un miroir de guidage (20),
• des miroirs galvanométriques de déflexion (21, 22),
• une lentille (23) qui permet de visualiser au moins un objet (11) situé sur le plateau (10),
- une source laser (24),
- un calculateur (25) muni d'un logiciel de reconnaissance de forme (26) qui permet de contrôler le fonctionnement de ladite première caméra, de ladite seconde caméra, de ladite source laser et de moyens de pilotage en mouvement de ladite tête galvanométrique (XYZ).

2. Système selon la revendication 1 comprenant des premier et second miroirs galvanométriques réfléchissants (21, 22).

3. Système selon la revendication 1 comprenant un miroir escamotable (20).

4. Système selon la revendication 1 comprenant une lentille à champ plat (23).

5. Système selon la revendication 1 comprenant un tapis (19) d'amenée des objets à usiner sur leur surface de référence, précédé d'une alimentation de prépositionnement des pièces (11).

6. Système selon la revendication 3 comprenant une source de gaz réactif (32) à proximité du plateau (10).

7. Système selon la revendication 1, dans lequel le filtre (15) en sortie de la première caméra (13) laisse passer une longueur d'onde d'environ 600 nm.

8. Système selon la revendication 1, dans lequel la source laser (24) est une source de longueur d'onde environ 1064 nm, le filtre (18) en sortie de la seconde caméra (16) laissant passer une telle longueur d'onde.

9. Système selon la revendication 1, dans lequel l'usinage correspond à un marquage, un soudage, un perçage, un découpage ou un traitement thermique.

10. Procédé d'usinage d'objets à l'aide d'un laser, à l'aide d'un système d'usinage d'objets qui comprend un plateau (10) support d'objets, une tête galvanométrique (12), une source laser (24) et un calculateur (25), ledit procédé comprenant des étapes de :
- dépôt des objets (11), positionnés sur leur face de référence, sur ledit plateau (10),
- visualisation de l'ensemble de ces objets (11) en grand champ, avec identification de chaque objet (11) avec sa position et son orientation,
- visualisation de la zone à usiner en champ réduit avec une grande résolution, sur un des objets (11),
- usinage de cet objet (11) au moyen d'un faisceau issu de la source laser.

## Patentansprüche

1. System zur Bearbeitung von Gegenständen (11) mittels eines Laserstrahls, umfassend:
- eine Zuführungseinrichtung von Gegenständen mit Vorpositionierung in ihrer Bezugsfläche,
- ein Trägerplateau (10) der Gegenstände,
- einen galvanometrischen Kopf (12), umfassend:
• eine erste oder Großfeld-Kamera (13) mit ihrer Fokussierlinse (14), an deren Ausgang sich ein erster Filter (15) befindet,
• eine zweite oder Kleinfeld-Kamera (16) mit ihrer Fokussierlinse (17), an deren Ausgang sich eine zweiter Filter (18) befindet,
• ein Lenkspiegel (20),
• galvanometrische Ablenkungsspiegel (21, 22),
• eine Linse (23), die ermöglicht, wenigstens einen auf dem Plateau (10) befindlichen Gegenstand (11) sichtbar zu machen,
- eine Laserquelle (24),
- einen mit einer Formerkennungs-Software (26) ausgestatteten Rechner (25), der ermöglicht, den Betrieb der ersten Kamera, der zweiten Kamera, der genannten Laserquelle und der Bewegungssteuerungseinrichtungen des genannten gaivanometrischen Kopfes zu steuern (XYZ).

2. System nach Anspruch 1, einen ersten und einen zweiten reflektierenden galvanometrischen Spiegel (21, 22) umfassend.

3. System nach Anspruch 1, einen wegschwenkbaren Spiegel (20) umfassend.

4. System nach Anspruch 1, eine Flachfeldlinse (23) umfassend.

5. System nach Anspruch 1, ein Band (19) umfassend, um die zu bearbeitenden Gegenstände (11) auf ihre Bezugsfläche zu befördern, nach einer Vorpositionierungs-Zuführung der Gegenstände.

6. System nach Anspruch 3, eine Reaktionsgasquelle (32) in der Nähe des Plateaus (10) umfassend.

7. System nach Anspruch 1, bei dem der Filter (15) am Ausgang der ersten Kamera (13) eine Wellenlänge von ungefähr 600 nm durchlässt.

8. System nach Anspruch 1, bei dem die Laserquelle (24) eine Quelle mit einer Wellenlänge von ungefähr 1064 nm ist und der Filter am Ausgang der zweiten Kamera (16) eine solche Wellenlänge durchlässt.

9. System nach Anspruch 1, bei dem die Bearbeitung einem Markieren oder Schweißen oder Bohren oder Schneiden oder einer thermischen Behandlung entspricht.

10. Verfahren zur Bearbeitung von Gegenständen mittels Lasers mit Hilfe eines Systems zur Bearbeitung von Gegenständen, das ein Trägerplateau (10) der Gegenstände, einen galvanometrischen Kopf (12), eine Laserquelle (24) und einen Rechner (25) umfasst, wobei das Verfahren die folgenden Schritte umfasst:
- Aufbringung der Gegenstände (11), auf ihrer Bezugsfläche positioniert, auf dem genannten Plateau (10),
- Großfeld-Sichtbarmachung aller dieser Gegenstände (11), mit Identifizierung jedes Gegenstands (11) mit seiner Position und seiner Ausrichtung,
- hochauflösende Kleinfeld-Sichtbarmachung der auf einem der Gegenstände (11) zu bearbeitenden Zone,
- Bearbeitung dieses Gegenstands (11) mittels eines Strahls der Laserquelle.

## Claims

1. System for machining objects (11) using a laser beam, comprising:
- a supply of objects with prepositioning on their reference surface,
- an object support tray (10),
- a galvanometric head (12) comprising:
**.** a first wide field camera (13) with its focussing lens (14), with a first filter (15) located at the output from the first camera,
. a second narrow field camera (16) with its focussing lens (17), with a second filter (18) located at the output from the second camera,
**.** a guide mirror (20),
**.** galvanometric deflection mirrors (21, 22),
**.** a lens (230 that displays at least one object (11) located on the tray (10),
- a laser source (24),
- a computer (25) on which a shape recognition software (26) is installed for checking operation of the said first camera, the said second camera, the said laser source and movement control means for the said galvanometric head (XYZ).

2. System according to claim 1, comprising first and second reflecting galvanometric mirrors (21, 22).

3. System according to claim 1, comprising a retractable mirror (20).

4. System according to claim 1, comprising a flat field lens (23).

5. System according to claim 1, comprising a belt (19) carrying objects to be machined on their reference surface, preceded by a pre-positioning supply for parts (11).

6. System according to claim 3, comprising a reactive gas source (32) close to the tray (10).

7. System according to claim 1, in which the filter (15) at the output from the first camera (13) allows a wavelength of about 600 nm to pass.

8. System according to claim 1, in which the laser source (24) is a source with a wavelength of about 1064 nm, the filter (18) at the output from the second camera (16) allowing such a wavelength to pass.

9. System according to claim 1, in which machining corresponds to marking, welding, drilling, cutting or heat treatment.

10. Method for machining objects using a laser and an object machining system comprising an object support tray (10), a galvanometric head (12), a laser source (24), and a computer (25), the said method including steps to:
- deposit objects (11), positioned on their reference face, on the said tray (10),
- display of all these objects (11) in wide field, with identification of each object (11) with its position and its orientation,
- display the area to be machined in narrow field with high resolution, on one of the objects (11),
- machining of this object (11) using a beam output from the laser source.
